Europäisches Patentamt

European Patent Office

Office européen des brevets

(19)

(11) Veröffentlichungsnummer: **0 002 491**
B1

(12) **EUROPÄISCHE PATENTSCHRIFT**

(45) Veröffentlichungstag der Patentschrift: **16.09.81**

(51) Int. Cl.³: **B 65 G 51/00,** B 65 G 15/60

(21) Anmeldenummer: **78101576.3**

(22) Anmeldetag: **06.12.78**

(54) Bauelement.

(30) Priorität: **12.12.77 DE 2755249**

(43) Veröffentlichungstag der Anmeldung:
**27.06.79 Patentblatt 79/13**

(45) Bekanntmachung des Hinweises auf die Patenterteilung:
**16.09.81 Patentblatt 81/37**

(84) Benannte Vertragsstaaten:
**BE CH FR GB IT LU NL SE**

(56) Entgegenhaltungen:
**FR - A- -2 101 133**
**FR - A - 2 163 794**
**US - A - 3 362 755**

(73) Patentinhaber: **Eichhorn, Helmut**
**Kopernikusring 62**
**D-4030 Ratingen (DE)**

(72) Erfinder: **Eichhorn, Helmut**
**Kopernikusring 62**
**D-4030 Ratingen (DE)**

Bauelement

Die Erfindung betrifft eine Bauelement zur Verminderung der Reibung zwischen relativ zueinander bewegten Gegenständen. Dadurch werden Energieverbrauch und Verschleiß herabgesetzt.

Es sind Vorrichtungen bekannt, bei denen ein Glasband über ein aus einem gasförmigen Medium gebildetes Stützkissen geführt wird (DE - B - 14 71 896; DE - B - 18 07 582).

Der Transport von Teilen mit flachen Auflageflächen soll erleichtert werden durch Tische mit poröser Tischplatte (DE - U - 19 45 978), Luftkissentrageeinrichtungen und Luftkissenleiteinrichtungen.

Für die Förderung von feinkörnigen Schüttgütern werden geneigte Förderrinnen mit einem Auflockerungsboden aus durchlässigen Werkstoffen als Fließbett ver wendet. Eine ähnliche Vorrichtung wird für den Transport von flüssigem Glas vorgeschlagen (DE - A - 24 10 923).

Beim Biegen von Glasschieben soll die Berührung zwischen Scheibe und Formenwerkstoff durch ein Gaspolster verhindert werden (DE - A - 19 19 959).

Bei den bisher besprochenen Verfahren und Vorrichtungen, bei denen die Reibung durch ein Luftpolster verringert werden soll, ist die Erzeugung eines gleichmäßigen Luftkissens nicht möglich. Die Leckverluste durch ungleichmäßige Belastung oder unkontrollierte Luftaustritte sind erheblich und es kommt immer wieder zu örtlichen Zusammenbrüchen des Luftkissens und damit zu Berührungen zwischen den bewegten und unbewegten Teilen. Die US - A - 33 62 755 und FR - A - 21 01 133 beschreiben Trnasportvorrichtungen, bei denen ein Kissen oder Film aus Luft, Wasser oder einem anderen Fluid zur Herabsetzung der Reibung verwendet wird. Es wird beschrieben, daß sich die Durchflußmenge einer porösen Wand bei der Belastung durch einen Gegenstand ändert und von der örtlichen Dicke oder Porosität sowie der Änderung des Vordruckes bestimmt wird. Es wird als wichtig herausgestellt, daß die tragenden Flächen einen verhältnismäßig großen Umfang entsprechend der Belastung haben sollen. Bei der US - A - 33 62 755 soll die bessere Verteilung des Trägermediums durch die Abdeckung der nichtfunktionalen Teile der durchlässigen Wand erreicht werden.

Es ist in allen bekannten Fällen nicht möglich, den optimalen Betriebspunkt festzulegen, obwohl eine sorgfältige Auslegung der durchlässigen Wand als erforderlich angesehen wird. Um den gleichmäßigen Aufbau des Luftkissens zu erreichen, wird mit überhöhtem Vordruck und starkem Energieverlust gearbeitet.

Es ist die Aufgabe der in den Ansprüchen 1 und 2 angegebenen Erfindung, die Reibung zwischen relativ zueinander bewegten Gegenständen oder Teilen herabzusetzen, wobei der Sicherheit und Wirtschaftlichkeit der Ausführung besonderes Augenmerk geschenkt wird.

Diese Aufgabe wird nach der Erfindung dadurch gelöst, daß zwischen die relativ zueinander bewegten teile ein Bauelement eingefügt wird, das mindestens eine durchlässige Wand hat, die nach der Formel

$$s = d \cdot \left(1 - \frac{d}{2p}\right) \cdot \frac{a \cdot b \cdot F^2}{V \cdot (b \cdot e \cdot F + a \cdot r \cdot V)}$$

in der Weise ausgelegt ist, daß der Druckabfall in der unbelasteten Wand gleich ist der Belastung des Bauelementes durch die ihm zugeordneten, relativ zueinander bewegten Teil oder Gegenstände. Damit wird erreicht, daß die Menge des durch die Wand tretenden Trägermediums nicht unkontrolliert anwachsen kann und es wird ein Zusammenbruch des Druckes an anderer Stelle vermieden.

Die mit der Erfindung erzielten Vorteile bestehen insbesondere darin, daß Verschleiß und Energieverbrauch herabgesetzt werden. Bei Transportbändern ergibt sich eine größere Länge, höhere Geschwindigkeit, kleinere Spannung und länngere Lebensdauer der Förderbänder. Bei bewegter Fertigware wird eine Berührung der Warenbahnen mit der Tragekonstruktion vermieden. Bei Stückgut auf Rutschen genügt eine geringe Neigung zur. Uberwindung der Haftriebung und Bewegungsreibung, während bei Transportpaletten die Kraft zum Verschieben herabgesetzt wird.

Zur Verhinderung einer elektrischen Aufladung oder eines starken Temperaturgefälles können die durchlässigen Wände an eine Stromquelle angeschlossen sein.

Die durchlässigen Wände der Bauelemente bestehen aus Geweben, verfestigten Pulvern und Fasern oder einer Kombination dieser Stoffe.

d = Druckverlust
p = Absoluter Umgebungsdruck des Bauelementes
s = Dicke der durchlässigen Wand
F = Fläche der durchlässigen Wand
V = Durchflußmenge
e = dynamische Zähigkeit des Trägermediums
r = Dichte des Trägermediums
a = Kenngroße für die Durchströmbarkeit der Wand
b = Trägheits- oder Turbulenzkenngröße der Wand

**Patentansprüche**

1. Bauelement zur Verminderung der Reibung zwischen relativ zueinander bewegten Teilen oder Gegenständen mit mindestens einer durchlässigen Wand, die dem durchtretenden Trägermedium einen Widerstand entgegensetzt, dadurch gekennzeichnet, daß die durchlässige Wand nach der Formel

$$s = d \cdot \left(1 - \frac{d}{2p}\right) \cdot \frac{a \cdot b \cdot F^2}{V \cdot (b \cdot e \cdot F + a \cdot r \cdot V)}$$

in der Weise ausgelegt ist, daß der Druckabfall in der unbelasteten Wand gleich ist der Belastung des Bauelementes durch die ihm zugeordneten, relativ zueinander bewegten Teile oder Gegenstände.

2. Bauelement nach Anspruch 1, dadurch gekennzeichnet, daß die durchlässige Wand unter regelbarer Spannung einer Gleich- oder Wechselstromquelle steht.

## Claims

1. Structural element designed to prevent the friction between parts or object in a relative mutual motion, having at least one permeable wall offering a resistance to the penetrating carrier medium, characterized in that the permeable wall is designed according to the formula

$$s = d \cdot \left(1 - \frac{d}{2p}\right) \cdot \frac{a \cdot b \cdot F^2}{V \cdot (b \cdot e \cdot F + a \cdot r \cdot V)}$$

in such a manner that the pressure drop in the unstressed wall is equal to the load exerted on the structural element by the parts or objects in relative mutual motion associated to said element.

2. Structural element according to claim 1, characterized in that the permeable wall is subject to the controllable voltage of a direct or alternating current source.

## Revendications:

1. Elément de construction destiné à diminuer le frottement entre des pièces ou objets de déplaçant, l'un par rapport à l'autre, doté au moins d'une paroi poreuse opposant une résistance au fluide porteur de passage, caractérisé par le fait que le paroi poreuse est conçue d'après la formule

$$s = d \cdot \left(1 - \frac{d}{2p}\right) \cdot \frac{a \cdot b \cdot F^2}{V \cdot (b \cdot e \cdot F + a \cdot r \cdot V)}$$

de façon à ce que la chute de pression dans la paroi non chargée soit égale à la charge exercée sur le'élément de construction par les pièces ou objets se déplaçant l'un par rapport à l'autre qui lui sont affectés.

2. Elément de construction suivant la revendication 1, caractérisé par le fait qu le paroi poreuse est sous tension réglable provenant d'une source courant continu ou alternatif.